## Europäisches Patentamt
## European Patent Office
## Office européen des brevets

(19)

(11) Veröffentlichungsnummer: **0 215 217**
**B1**

(12)

# EUROPÄISCHE PATENTSCHRIFT

(45) Veröffentlichungstag der Patentschrift:
**30.03.88**

(51) Int. Cl.⁴: **B 65 D 90/00**

(21) Anmeldenummer: **86109115.5**

(22) Anmeldetag: **01.06.83**

(60) Veröffentlichungsnummer der früheren Anmeldung
nach Art. 76 EPÜ: **0097269**

(54) **Frachtcontainer.**

(30) Priorität: **26.10.82  DE 3239620**

(43) Veröffentlichungstag der Anmeldung:
**25.03.87 Patentblatt 87/13**

(45) Bekanntmachung des Hinweises auf die Patenterteilung:
**30.03.88 Patentblatt 88/13**

(84) Benannte Vertragsstaaten:
**BE FR GB IT NL SE**

(56) Entgegenhaltungen:
**EP - A - 0 054 881**

(73) Patentinhaber: **Westerwälder Eisenwerk Gerhard GmbH,
Ringstrasse Postfach 20, D-5241 Weitefeld/Sieg (DE)**

(72) Erfinder: **Gerhard, Helmut, Im Schlosssteinchen 31,
D-5241 Weitefeld (DE)**

(74) Vertreter: **Strehl, Peter, Dipl.-Ing. et al, Strehl,
Schübel-Hopf, Schulz Patentanwälte
Widenmayerstrasse 17 Postfach 22 03 45,
D-8000 München 22 (DE)**

## Beschreibung

Die Erfindung betrifft einen Frachtcontainer nach dem Oberbegriff des Patentanspruchs 1.

Ein Eckbeschlag für einen derartigen Frachtcontainer ist in der europäischen Patentanmeldung Veröffentlichungsnummer 54 881 beschrieben. Unter anderem ist dort erläutert, wie aus einem kreisförmigen oder quadratischen Zuschnitt mit einer mittleren kreisförmigen oder quadratischen Öffnung durch Kantungsvorgänge ein Eckbeschlag herstellbar ist, bei dem zwei Quadranten des Zuschnitts unter Bildung einer Fläche des Eckbeschlags einander überlappen. Bei einer Ausführungsform wird dort die Öffnung in dem dem Container abgewandten Eckbereich lediglich durch einen Schnitt gebildet, so dass sich an dieser Ecke ein nach aussen ragender, gekanteter schnabelartiger Vorsprung ergibt, und unterhalb dieses Vorsprungs ist in der gleichen Kante ein Loch vorgesehen, durch das ein hinter dem Vorsprung eingeführter Kranhaken mit seiner Spitze austreten kann. Im übrigen sind in den Wänden des Eckbeschlages nach der früheren Patentanmeldung Löcher vorgesehen, die wie bei dem herkömmlichen Eckbeschlag nach der ISO-Norm 1161 zum Einführen spezieller Vorrichtungen für die seitliche Kopplung benachbarter Container dienen.

Die deutsche Offenlegungsschrift 2 942 104 zeigt Frachtcontainer, die, von der Ecköffnung abgesehen, ebenfalls dem Oberbegriff des Patentanspruchs 1 entsprechen.

Um die Handhabung von Containern mittels Gabelstaplern zu ermöglichen, ist es üblich, an der Unterseite der Container zwischen den Eckbeschlägen Kanäle zum Einführen der Staplerarme vorzusehen. Derartige Kanäle verringern einerseits das Nutzvolumen, das innerhalb des von den Eckbeschlägen definierten Raumes zur Verfügung steht; andererseits erfordern sie zusätzliche Konstruktionselemente, die die Herstellung verteuern und das Gewicht des Containers erhöhen.

Der Erfindung liegt die Aufgabe zugrunde, einen Frachtcontainer anzugeben, der eine Handhabung mit Gabelstaplern ohne zusätzliche Konstruktionselemente gestattet.

Die erfindungsgemässe Lösung dieser Aufgabe ist im Patentanspruch 1 angegeben. Danach werden die den Containerrahmen bildenden Profilelemente selbst als Staplerkanäle genutzt, wobei die Eckbeschläge, an denen jeweils drei Profilelemente zusammenlaufen, so gestaltet sind, dass die stirnseitig offenen Staplerkanäle durch die Eckbeschläge hindurch zugänglich sind. Sind sämtliche Profilelemente als Staplerkanäle gestaltet, so lässt sich ein derartiger Container in allen Lagen, nämlich liegend, stehend und hochkant von jeder seiner vier Seiten her von den Armen eines Gabelstaplers aufnehmen.

Im Sinne dieser universellen Handhabung haben gemäss Anspruch 2 die Profilelemente Hohlprofil und sind im Querschnitt vorzugsweise im wesentlichen quadratisch oder kreisrund. Diese Gestaltung hat den Vorteil höherer Biegesteifigkeit gegenüber den flachen Querschnitten herkömmlicher Staplerkanäle. Alternativ ist es auch möglich, Profilelemente mit L-Querschnitt zu verwenden, wobei dann nur die jeweils oberen beiden Profilelemente eines Containers als Staplerkanäle benutzt werden können.

In der Weiterbildung der Erfindung nach Anspruch 4 ergibt sich der Vorteil, dass die Eckbeschläge bei maximal nutzbarer Ecköffnung möglichst viel Fläche zum Anschweissen der Profilelemente bieten. Die gerundeten Ecken der Ecköffnung begünstigen dabei das Anschmiegen und Arretieren eingeführter Kranhaken bei Diagonalzug. Auch die Weiterbildung der Erfindung nach Anspruch 5 hat den Vorteil, dass die Eckbeschläge zur Verbindung mit den Kantenelementen verhältnismässig grosse Flächen bieten.

Die Weiterbildung der Erfindung nach Anspruch 6 ist insofern von Vorteil, als die zum Durchführen von Kranhakenspitzen oder Koppelelementen geeigneten Öffnungen der Eckbeschläge in den besonders formstabilen Kantenbereichen liegen. Durch die nach Anspruch 7 erreichte doppelte Materialstärke wird eine besondere Festigkeit dieser beanspruchten Öffnungen erreicht. Die von den in Anspruch 6 und 7 genannten Ausschnitten gebildeten Kantenöffnungen können ferner mit Vorteil zum Durchführen von Stiften oder Haken verwendet werden, die in die Enden von Gabelstaplerarmen eingesteckt oder mit diesen fest verbunden sein können, wodurch eine sichere Halterung an den Gabelstaplerarmen auch dann erreicht wird, wenn diese nach Art der oberen Haken von Container-Seitenspreadern nur ein kurzes Stück in die Eckbeschläge und Profilelemente eingeführt werden.

Eine zusätzliche Versteifung des Container-Eckbereichs wird in der Weiterbildung der Erfindung nach Anspruch 8 erreicht, wobei die Weiterbildung nach Anspruch 9 insofern von Vorteil ist, als für diesen Zweck der bei der Herstellung der Eckbeschläge anfallende Verschnitt ausgenutzt wird. Eine besonders gute Versteifung wird in der Ausgestaltung der Erfindung nach Anspruch 10 erreicht.

Bevorzugte Ausführungsbeispiele der Erfindung werden nachstehend anhand der Zeichnungen näher erläutert. In den Zeichnungen zeigen

Fig. 1 eine perspektivische Darstellung der eine Containerecke bildenden, mit einem Eckbeschlag verschweissten Profilelemente;

Fig. 2 eine Seitenansicht der Anordnung nach Fig. 1;

Fig. 3 und 4 Varianten der in Fig. 2 gezeigten Anordnung; und

Fig. 5 eine perspektivische Ansicht einer Containerecke von innen zur Darstellung einer anderen Ausführungsform eines Knotenstücks.

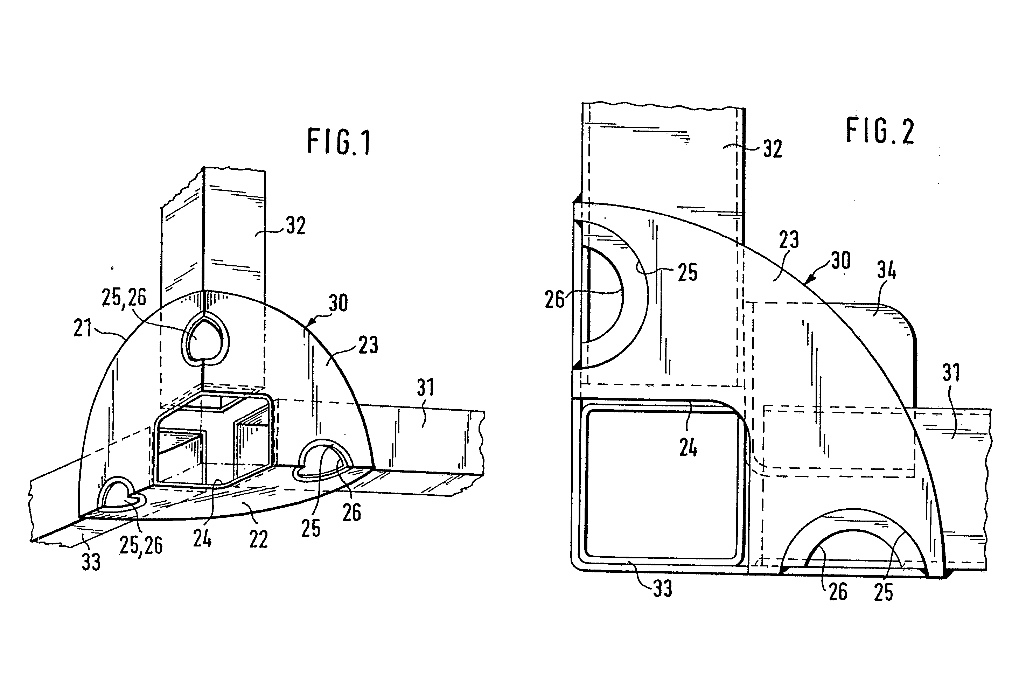

In Figur 1 und 2 sind die einen unteren linken Eckbereich eines Frachtcontainers bildenden Konstruktionselemente gezeigt, zu denen ein Eckbeschlag 30, drei Teile eines Containerrahmens bildende senkrecht zueinander verlaufende Profilelemente 31, 32, 33 und ein den Eckbeschlag verstärkendes Knotenstück 34 (nur in Fig. 2 gezeigt) gehören. Der Eckbeschlag besteht, wie oben erläutert, aus drei senkrecht zueinander verlaufenden Wandelementen 21, 22, 23, die gemeinsam eine Ecköffnung 24 bilden. Der Eckbeschlag 30 kann aus einem ebenen Zuschnitt durch Kanten und Verschweissen oder auch durch Pressen, Ziehen oder einen sonstigen Verformungsvorgang hergestellt sein. Bei dem Knotenstück 34 handelt es sich um dasjenige Materialstück, das beim Ausschneiden der Ecköffnung 24 aus dem Eckbeschlag 30 anfällt. An den drei Kanten weist der Eckbeschlag 30 ferner jeweils ein in beiden aneinanderstossenden Wandelementen ausgeschnittenes Kantenloch 25 auf.

Die drei Profilelemente 31, 32, 33 sind in die Kantenbereiche des Eckbeschlags 30 so weit eingeschoben, dass sie kurz vor der Ecköffnung 24 enden. Sie weisen ihrerseits ebenfalls jeweils ein Kantenloch 26 auf, das mit dem entsprechenden Kantenloch 25 des Eckbeschlags 30 im wesentlichen fluchtet. In dieser Stellung sind die Profilelemente 31, 32, 33 mit dem Eckbeschlag 30 an den in Figur 2 angedeuteten Stellen verschweisst. Das Knotenstück 34 ist so eingesetzt, dass seine beiden vertikalen Seitenflächen teilweise an den vertikalen Innenflächen der Profilelemente 31 und 33 anliegen und dort ebenfalls verschweisst sind. Die Verbindung zwischen dem Knotenstück 34 und dem vertikalen Profilelement 32 kann bei Bedarf über ein (in den Zeichnungen nicht dargestelltes) zusätzliches Bauelement erfolgen. Sofern die einander benachbarten senkrecht verlaufenden Kanten des Knotenstücks 34 und des vertikalen Profilelements 32 nicht zu stark abgerundet sind, kann auch eine unmittelbare Verschweissung der beiden Teile an diesen Kanten vorgenommen werden.

Die Profilelemente 31, 32, 33 sind als Hohlprofilelemente mit im wesentlichen quadratischem Querschnitt gestaltet. Die Ecköffnung 24 des Eckbeschlags 30 wird von drei in den einzelnen Wandelementen 21, 22, 23 liegenden im wesentlichen quadratischen Ausschnitten gebildet, deren von der gemeinsamen Ecke abgewandte Ecke gerundet ist. Diese Quadratflächen sind etwas grösser als der lichte Querschnitt der Profilelemente 31, 32, 33, so dass die Profilelemente als Staplerkanäle verwendet werden können und mit ihrem vollen Querschnitt durch die Ecköffnung 24 hindurch zugänglich sind. Die äussere Form der den Eckbeschlag 30 bildenden drei Wandelemente 21, 22 und 23 entspricht jeweils einem Kreisquadranten, wobei die Kreismittelpunkte in der (gedachten) Ecke des Eckbeschlags 30 zusammenfallen.

Ist ein Container an allen seinen acht Ecken gemäss der Darstellung in Figur 1 und 2 aufgebaut, so lässt er sich mittels eines Gabelstaplers in jeder beliebigen Lage und von jeder Seite her anheben, da die Staplerarme in jeder der drei Richtungen durch jeden Eckbeschlag hindurch in den von dem betreffenden Profilelement 31, 32, 33 gebildeten Staplerkanal eingeführt werden können. Wegen der aus Symmetriegründen quadratischen Staplerkanal-Querschnitte ist es günstig, wenn auch die Gablerarme bzw. Gabelzinken quadratischen Querschnitt haben. Dies ist gegenüber den üblichen flachen Zinkenquerschnitten wegen der erhöhten Biegesteifigkeit von Vorteil.

Zur Handhabung des Containers mittels Gabelstaplers können die Staplerarme in die beiden unteren oder die beiden oberen Eckbeschläge und die dahinter liegenden Profilelemente über eine entsprechend grosse Länge eingeführt werden. Statt dessen ist es auch möglich, zwei wesentlich kürzere Gabelarme oder Dorne in die beiden oberen Eckbeschläge und Profilelemente über eine verhältnismässig kurze Länge einzuführen und durch Arretierungsstifte zu sichern, die durch die Kantenlöcher 25, 26 hindurch in entsprechende Ausnehmungen in den Staplerarmen eingeführt werden oder in entsprechendem Abstand von staplerseitigem Ende der Arme fest mit diesen verbunden sind. Weiterhin ist es auch möglich, vergleichsweise kurze Dornen in alle vier dem Gabelstapler zugewandten Eckbeschläge und die dahinter liegenden Profilelemente einzuführen, wobei auch in diesem Fall mit Seitenspreadern gearbeitet wird. Die Reibung der vier Dorne innerhalb der vier Profilelemente sorgt in diesem Fall für eine noch sicherere Halterung des Containers am Gabelstapler.

Schliesslich können durch die unteren Eckbeschläge und miteinander fluchtenden Hohlprofilelemente von mehreren hintereinander stehenden Containern zwei parallele Koppelstangen hindurchgeführt werden. Eine derartig gekoppelte Einheit könnte ohne Plattform oder Chassis auf Achselemente gestellt werden. Die mit diesem Konzept erzielte Gewichtsersparnis ist offenkundig.

Anstelle der in Figur 1 und 2 gezeigten Profilelemente mit im wesentlichen quadratischem Hohlprofil können auch solche mit kreisförmigem Hohlprofil verwendet werden. In diesem Fall müssen auch die Arme oder Zinken des Gabelstaplers bzw. Seitenspreaders kreisförmigen Querschnitt haben, was für die Handhabung von Papierrollen oder dergleichen bekannt ist.

Ferner ist es auch möglich, als Profilelemente 31, 32, 33 solche mit L-Profil zu verwenden, die in üblicher Weise so angeordnet sind, dass ihre Kanten die Aussenkanten des Containerrahmens bilden. In einem solchen Fall können nur die entsprechend der jeweiligen Lage des Containers oberen beiden Profilelemente als Staplerkanäle verwendet werden.

Zum Heben des Containers mittels Kranhaken wird dieser durch die Ecköffnung 24 hindurch derart eingeführt, dass seine Spitze durch diejenige Kantenöffnung 25, 26 austritt, die in Zugrichtung des Kranseiles liegt. Die in Figur 1 und 2 gezeigte abgerundete Form der im übrigen durch Quadratflächen gebildeten Ecköffnung 24 bewirkt dabei, dass sich der Kranhaken mit seinem dem Seilangriffspunkt benachbarten Abschnitt in die Rundung schmiegt und dadurch in derjenigen Stellung zentriert wird, in der er gegen ein Herausfallen bei schlaffem Seil gesichert ist.

Beim Verkoppeln neben- oder aufeinander liegender Container lassen sich Koppelelemente durch die Ecköffnungen 24 oder durch die Kantenöffnung 25, 26 der jeweils unmittelbar benachbarten Eckbeschläge 30 der beiden Container einführen, wobei diese Koppelelemente zusätzlich durch die jeweils anderen Löcher bzw. Öffnungen hindurch fixiert werden können.

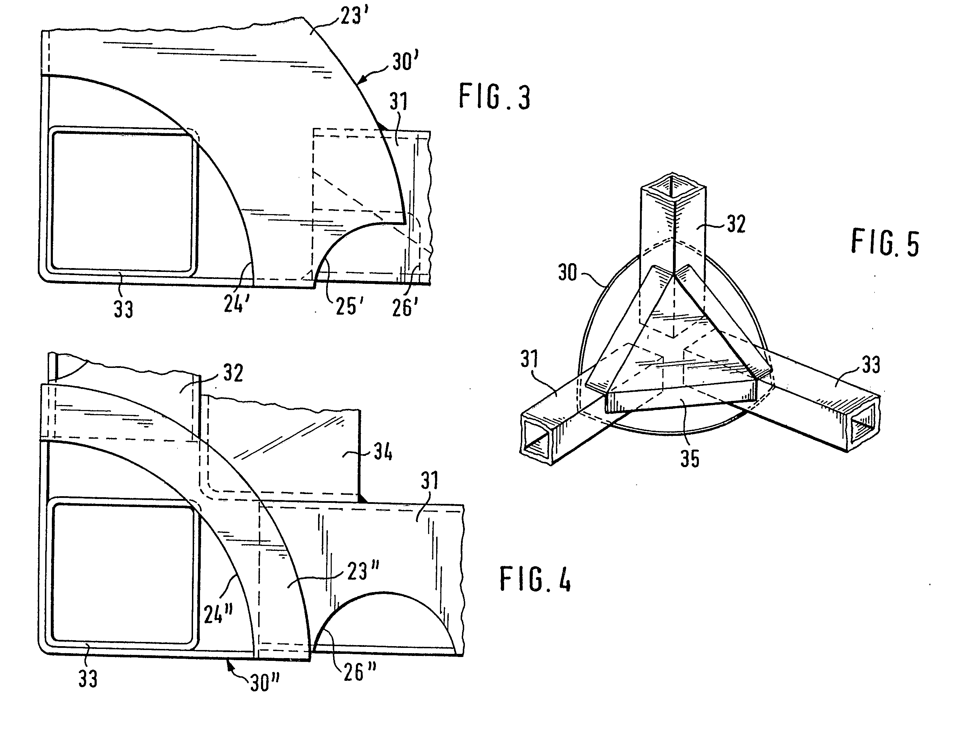

Die Ausführungsform nach Figur 3 unterscheidet sich von der nach Figur 1 und 2 dadurch, dass die Ecköffnung 24' von drei Viertelkreisbögen gebildet ist, deren Radius im wesentlichen gleich der Diagonale des lichten Querschnitts der Profilelemente 31, 32, 33 ist. Die Wandelemente, von denen in Figur 3 insbesondere das Wandelement 23 zu sehen ist, sind dabei auf einen verhältnismässig schmalen Ring reduziert, der nur bis zu einem Teil der in den Profilelementen 31, 32 vorgesehenen Kantenlöcher 26 verläuft. In diesen Kantenbereichen ist der Eckbeschlag nach Figur 3 mit Kantenausschnitten 25' versehen.

Während bei dem Eckbeschlag 30 nach Figur 1 und 2 die Kantenlöcher 25, 26 in den beiden aneinanderstossenden Wandelementen jeweils halbkreisförmig ausgebildet sind (wobei das im Eckbeschlag vorgesehene Kantenloch 25 zur Aufnahme von Toleranzen in der gegenseitigen Ausrichtung etwas grösser ist als das Kantenloch 26 in den Profilelementen), ist es auch möglich, das Kantenloch 26' in den Profilelementen durch einen rechteckigen oder schrägen Ausschnitt zu bilden, wie dies in Figur 3 durch gestrichelte Linien angedeutet ist. Ein gerader über die Kante des Profilelements verlaufender Ausschnitt ist dabei herstellungstechnisch besonders günstig.

In Figur 3 ist kein Knotenstück gezeigt. Ferner sind die Profilelemente nur über ein kurzes Stück in den Eckbeschlag 30' eingeführt. Diese Gestaltung der Containerecke kommt daher mit wenig Material aus und ist leicht, was für Kleincontainer brauchbar und günstig sein kann.

In der in Figur 4 gezeigten weiteren Variante sind die Wandelemente des Eckbeschlags 30'' auf eine noch geringere Materialbreite reduziert. In diesem Fall endet der Eckbeschlag ausserhalb der in den Profilelementen 31, 32 vorgesehenen Kantenlöcher 26''. Zur Erhöhung der Steifigkeit ist dabei wieder ein Knotenstück 34 vorgesehen, das in diesem Fall so eingesetzt ist, dass seine dem Betrachter zugewandte senkrechte Fläche an dem Wandelement 23'' anliegt und mit diesem verschweisst ist, während die beiden übrigen Flächen des Knotenstücks 34 mit der oberen Fläche des Profilelements 31 bzw. der rechten inneren Fläche des Profilelements 32 verschweisst sind. In diesem Fall lässt sich eine Verbindung zwischen Knotenstück 34 und dem dritten Profilelement 33 wiederum über ein zusätzliches (nicht gezeigtes) Bauelement erreichen.

In Figur 5 ist ein anderes Knotenstück 35 gezeigt, das im wesentlichen aus einem gleichseitigen ebenen Flächenstück mit an den drei Seiten angekanteten trapezförmigen Abschnitten besteht. Die gleichseitige Dreiecksfläche verläuft dabei im wesentlichen senkrecht zur Raumdiagonale der von den drei Profilelementen 31, 32, 33 definierten Containerecke. Die trapezförmigen Abschnitte sind gegenüber der gleichseitigen Flächen zur Ecke hin gekantet, so dass ihre Seitenkanten an den Innenflächen der Profilelemente 31, 32, 33 anliegen und mit diesen verschweisst sind. Mit dem Knotenstück 35 wird eine gleichmässige und sichere Versteifung gegenüber allen drei Profilelementen erreicht.

Die oben beschriebenen Gestaltungsmerkmale der drei in den Zeichnungen gezeigten Ausführungsbeispiele können je nach Bedarf variiert werden. So kann auch in der Ausführungsform nach Figur 3 ein Knotenstück verwendet werden. In jedem Fall kann das Knotenstück entsprechend Figur 2 und 4 oder entsprechend Figur 5 gestaltet sein. Ferner kann der Eckbeschlag in sämtlichen Fällen anstelle der gezeigten Kreisquadranten aus dreieckigen oder auch quadratischen Wandelementen aufgebaut sein. In ähnlicher Weise kann die Ecköffnung 24 des Eckbeschlags in jedem Fall aus quadratischen Ausschnitten mit gerundeter Ecke gemäss Figur 1 oder 2 oder aus viertelkreisbogenförmigen Ausschnitten gemäss Figur 3 und 4 oder auch aus dreieckigen Ausschnitten gebildet sein.

## Patentansprüche

1. Frachtcontainer mit den Containerrahmen bildenden Profilelementen (31, 32, 33) und mit den Enden der Profilelemente verbundenen Eckbeschlägen (30), deren jeder drei die Ecke definierende und eine gemeinsame Ecköffnung (24) bildende Wandelemente (21, 22, 23) aufweist, dadurch gekennzeichnet, dass mindestens ein paar der Profilelemente (31, 32, 33) als stirnseitig offene Staplerkanäle gestaltet sind, dass die Ecköffnung (24) so bemessen ist, dass sie die lichte Öffnung jedes Staplerkanals in dessen Verlängerung freilässt, und dass jedes Profilelement (31, 32, 33) ausserhalb der Verlängerungen der lichten Öffnungen der jeweils anderen Staplerkanäle endet.

2. Frachtcontainer nach Anspruch 1, dadurch gekennzeichnet, dass die Profilelemente (31, 32, 33) Hohlprofil mit im wesentlichen quadratischem oder kreisförmigem Querschnitt aufweisen.

3. Frachtcontainer nach Anspruch 1, dadurch gekennzeichnet, dass die Profilelemente L-Querschnitte haben, deren Kanten die Aussenkanten des Containers bilden.

4. Frachtcontainer nach einem der Ansprüche 1 bis 3, dadurch gekennzeichnet, dass die Ecköffnung (24) in den drei Wandelementen (21, 22, 23) des Eckbeschlags (30) jeweils ein Quadrat bildet, dessen der Aussenecke des Eckbeschlags gegenüberliegende Ecke gerundet ist.

5. Frachtcontainer nach einem der Ansprüche 1 bis 4, dadurch gekennzeichnet, dass die drei Wandelemente (21, 22, 23) des Eckbeschlags (30) jeweils viertelkreisförmig mit in der Aussenecke des Eckbeschlags zusammenfallenden Kreismittelpunkten sind.

6. Frachtcontainer nach einem der Ansprüche 1 bis 5, dadurch gekennzeichnet, dass die Profilelemente (31, 32, 33) in ihren Endbereichen in der eine Aussenkante des Containerrahmens bildenden Kante jeweils einen Ausschnitt (26) aufweisen.

7. Frachtcontainer nach Anspruch 6, dadurch gekennzeichnet, dass die Eckbeschläge (30) an ihren Kanten jeweils einen mit dem Ausschnitt (26) des betreffenden Profilelements (31, 32, 33) im wesentlichen fluchtenden Ausschnitt (25) aufweisen.

8. Frachtcontainer nach einem der Ansprüche 1 bis 7, gekennzeichnet durch ein die Enden der Profilelemente (31, 32, 33) an vom jeweiligen Eckbeschlag (30) abgewandten Stellen verbindendes Knotenstück (34).

9. Frachtcontainer nach Anspruch 8, dadurch gekennzeichnet, dass das Knotenstück (34) das durch Ausschneiden der Ecköffnung (24) anfallende Materialstück eines Eckbeschlags (30) ist.

10. Frachtcontainer nach Anspruch 8, dadurch gekennzeichnet, dass das Knotenstück (35) ein generell quer zur Raumdiagonale des Eckbeschlags (30) verlaufendes Flächenstück ist, das mit Innenflächen der Profilelemente (31, 32, 33) verbunden ist.

## Claims

1. Freight container comprising section elements (31, 32, 33) forming the container frame, and corner fittings (30) joined to the ends of the section elements, each of said corner fittings including three wall members (21, 22, 23) defining the corner and forming a common corner opening (24), characterized in that at least a pair of said section elements (31, 32, 33) is configured as fork truck channels with open ends, that the corner opening (24) is dimensioned so as to leave free the clear opening of each fork truck channel in the extension thereof, and that each section element (31, 32, 33) terminates outside of the extensions of the clear openings of the respective other truck channels.

2. Freight container as claimed in claim 1, characterized in that the section elements (31, 32, 33) are hollow-section elements with substantially square or circular cross-section.

3. Freight container as claimed in claim 1, characterized in that the section elements are of L-shaped cross-section, the edges thereof forming the outer edges of the container.

4. Freight container as claimed in any of the claims 1 to 3, characterized in that the corner opening (24) forms a square in each of the respective three wall members (21, 22, 23) of the corner fitting (30), the corner of said square opposite to the outer corner of the corner fitting being formed with a radius.

5. Freight container as claimed in any of the claims 1 to 4, characterized in that each of the three wall members (21, 22, 23) of the corner fitting (30) has the shape of a quarter circle, the centres of the circles coinciding in the outer corner of the corner fitting.

6. Freight container as claimed in any of the claims 1 to 5, characterized in that the end portions of the section elements (31, 32, 33) each are formed with a cutout (26) in the edge defining an outer edge of the container frame.

7. Freight container as claimed in claim 6, characterized in that the edges of the corner fittings (30) each are provided with a cutout (25) substantially in alignment with the cutout (26) of the respective section element (31, 32, 33).

8. Freight container as claimed in any of the claims 1 to 7, characterized by an attachment fitting (34) which joins the ends of the section elements (31, 32, 33) at locations facing away from the respective corner fitting (30).

9. Freight container as claimed in claim 8, characterized in that the attachment fitting (34) is the piece of material of a corner fitting (30) obtained upon cutting of the corner opening (24).

10. Freight container as claimed in claim 8, characterized in that the attachment fitting (35) is a plane piece which extends generally transversely to the body diagonal of the corner fitting (30) and is joined to inner faces of the section elements (31, 32, 33).

## Revendications

1. Conteneur de transport avec des éléments profilés (31, 32, 33) formant le cadre du conteneur et avec des pièces de coin (30) rattachées aux extrémités des éléments profilés, dont chacune comporte trois éléments de paroi (21, 22, 23) qui définissent le coin et constituent une ouverture de coin (24) commune, caractérisé en ce qu'au moins une paire des éléments profilés (31, 32, 33) sont conformés en tant que canaux de chariot élévateur ouverts du côté frontal; que l'ouverture de coin (24) est dimensionnée de telle façon qu'elle laisse libre l'ouverture intérieure de chaque canal de chariot élévateur dans le prolongement de celui-ci; et que chaque élément profilé (31, 32, 33) se termine respectivement à l'extérieur des prolongements des ouvertures libres des autres canaux de chariot élévateur.

2. Conteneur de transport selon la revendication 1, caractérisé en ce que les éléments profilés (31, 32, 33) présentent un profil creux avec une section transversale sensiblement carrée ou circulaire.

3. Conteneur de transport selon la revendication 1, caractérisé en ce que les éléments profilés présentent des sections transversales en L dont les arêtes forment les arêtes extérieures du conteneur.

4. Conteneur de transport selon l'une quelconque des revendications 1 à 3, caractérisé en ce que l'ouverture de coin (24) dans les trois éléments de paroi (21, 22, 23) de la pièce de coin (30) forme à chaque fois un carré dont le coin opposé au coin extérieur de la pièce de coin est arrondi.

5. Conteneur de transport selon l'une quelconque des revendications 1 à 4, caractérisé en ce que les trois éléments de paroi (21, 22, 23) de la pièce de coin (30) présentent chacun une forme en quart de cercle dont les centres de cercle coïncident avec le coin extérieur de la pièce de coin.

6. Conteneur de transport selon l'une quelconque des revendications 1 à 5, caractérisé en ce que les éléments profilés (31, 32, 33) présentent chacun, dans la région de leurs extrémités, une découpure (26) dans l'arête constituant une arête extérieure du cadre du conteneur.

7. Conteneur de transport selon la revendication 6, caractérisé en ce que les pièces de coin (30) présentent chacune sur leurs arêtes une découpure (25) sensiblement alignée avec la découpure (26) de l'élément profilé (31, 32, 33) correspondant.

8. Conteneur de transport selon l'une quelconque des revendications 1 à 7, caractérisé en ce qu'il comprend un élément nodal (34) qui relie les extrémités des éléments profilés (31, 32, 33) à des endroits opposés à la pièce de coin (30) respective.

9. Conteneur de transport selon la revendication 8, caractérisé en ce que l'élément nodal (34) est l'élément d'une pièce de coin (30) obtenu par le découpage de l'ouverture de coin (24).

10. Conteneur de transport selon la revendication 8, caractérisé en ce que l'élément nodal (35) est un élément de surface qui s'étend essentiellement perpendiculairement à la diagonale dans l'espace de la pièce de coin (30) et qui est rattachée à des faces intérieures des éléments profilés (31, 32, 33).

FIG.1

FIG.2

0 215 217

FIG. 3

FIG. 5

FIG. 4